# EUROPÄISCHE PATENTSCHRIFT

(11) **EP 2 014 515 B1**
(45) Veröffentlichungstag und Bekanntmachung des Hinweises auf die Patenterteilung: **05.03.2014**
(21) Anmeldenummer: 08004837.4
(22) Anmeldetag: 14.03.2008
(51) Int. Cl.: B60R 13/08

(54) **Dämmanordnung**
Insulation arrangement
Arrangement d'isolation

(30) Priorität: 13.07.2007 DE 102007032728
(43) Veröffentlichungstag der Anmeldung: 14.01.2009
(73) Patentinhaber: Dr. Ing. h.c. F. Porsche AG, 70435 Stuttgart (DE)
(72) Erfinder: Nabert, Bernd, 72296 Schopfloch (DE); Lutz, Ewin, 71701 Schwieberdingen (DE)

(56) Entgegenhaltungen:
- AU-B2- 561 123
- DE-A1- 10 047 818
- DE-A1- 19 501 292
- DE-A1- 19 960 006
- US-A1- 2003 164 624

## Beschreibung

Die vorliegende Erfindung betrifft eine Dämmanordnung in einem Kraftfahrzeug mit einem Dämmelement, insbesondere mit einem schallisolierenden Formteil, gemäß dem Oberbegriff des Anspruchs 1.

Eine solche Dämmanordnung ist aus DE 100 47 818 A1 bekannt.

Aus der DE 39 09 389 A1 ist eine Schallisolierung aus einer Schaumstoffschicht und einer Schwerschicht bekannt. Diese ist zwischen einer Instrumententafel und einem Stirnwand-Oberteil eines Personenkraftwagens angeordnet und hat an ihrem vorderen Randbereich eine konvexe Wölbung, welche federnd und damit schalldicht an einer gummielastischen Abdichtung der Instrumententafel anliegt.

Aus der DE 10 2005 056 840 B3 sind ein Schallisolationsteil und ein Verfahren zu dessen Herstellung bekannt. Auch dieses Schallisolationsteil besteht aus einer schallabsorbierenden Schicht und mindestens einer damit unmittelbar stoffschlüssig verbundenen Schwerschicht. Die Schwerschicht ist dabei als mikroporöse Sprühhaut ausgebildet und weist zumindest einen luftdurchlässigen und wenigstens einen luftundurchlässigen Teilflächenbereich auf.

Schallisolierungen in Kraftfahrzeugen spielen zunehmend eine Rolle, da sie maßgeblich einen Fahrkomfort des Kraftfahrzeuges bestimmen. Neben der Ausbildung der Schallisolierung ist auch deren Anbindung an die Karosserie von besonderer Bedeutung, da hier beispielsweise Schallbrücken entstehen können, welche dem Gedanken der Schallisolierung entgegenstehen. Darüber hinaus soll die Verbindung zwischen der Schallisolierung und der Karosserie des Kraftfahrzeuges einfach herzustellen beziehungsweise zu montieren sein und zudem dauerhaft ausgebildet sein, so dass die schallisolierende Wirkung vorzugsweise über die gesamte Lebensdauer des Kraftfahrzeuges erhalten bleibt.

Der vorliegenden Erfindung liegt die Aufgabe zugrunde, für eine gattungsgemäße Dämmanordnung eine verbesserte oder zumindest eine andere Ausführungsform anzugeben, welche sich insbesondere durch eine schalltechnisch überzeugende und dauerhafte Verbindung zur Karosserie auszeichnet.

Die Erfindung löst diese Aufgabe durch den Gegenstand des Anspruchs 1. Vorteilhafte Ausführungsformen sind Gegenstand der abhängigen Ansprüche.

Die Erfindung beruht auf dem allgemeinen Gedanken, ein Dämmelement über ein Dichtprofil randseitig einzufassen und über eben dieses Dichtprofil gleichzeitig an einer Karosserie eines Kraftfahrzeuges festzulegen. Um eine dauerhafte Verbindung zwischen der Karosserie einerseits und dem Dämmelement andererseits herstellen zu können, weist das Dämmelement in seinem mit dem Dichtprofil in Verbindung stehenden Randbereich eine Querschnittsverdickung auf, welche in eine hinterschnittartige Aufnahme des Dichtprofiles eingreift und so zuverlässig und dauerhaft im Dichtprofil gehalten werden kann. Die erfindungsgemäße hinterschnittartige Verbindung zwischen dem Dämmelement und dem Dichtprofil gewährleistet jedoch nicht nur die zuverlässige Fixierung des Dämmelementes im Dichtprofil, sondern auch eine einfache Montage des Dämmelementes am Dichtprofil beziehungsweise umgekehrt. Durch die erfindungsgemäße Dämmanordnung können somit Rationalisierungseffekte im Montageprozess erreicht werden, und gleichzeitig ist es möglich, das Dämmelement vorzugsweise entlang seines gesamten Randbereiches zuverlässig an der Karosserie zu lagern, wobei das Dichtprofil eine Schallübertragung zwischen Karosserie und Dämmelement zuverlässig unterbindet.

Zweckmäßig weist das Dichtprofil eine U-förmige Aufnahme auf, in welcher im Einbauzustand der im Querschnitt verdickte Randbereich des Dämmelementes sowie ein Randbereich eines Karosseriebauteils gemeinsam aufgenommen sind. Die U-förmige Aufnahme wirkt somit als Klammer, welche zwischen ihren U-Schenkeln sowohl den Randbereich des Karosseriebauteils als auch den Randbereich des Dämmelementes einklemmt. Bei einer derartigen Montage ist das Dämmelement so ausgerichtet, dass es mit seiner schallisolierenden Dämmschicht, beispielsweise einer Polyurethan-Weichschaumschicht, am Karosseriebauteil anliegt, so dass eine Schallübertragung zwischen dem Karosseriebauteil und dem Dämmelement üblicherweise nicht stattfindet. Nicht erfindungsgemäß kann auch vorgesehen sein, dass das Dichtprofil zumindest zwei U-förmige Aufnahmen aufweist, wobei die eine U-förmige Aufnahme den im Querschnitt verdickten Randbereich des Dämmelements und die andere den Randbereich des Karosseriebauteils aufnimmt. Bei einem derartig ausgebildeten Dichtprofil besteht kein direkter Kontakt zwischen dem Dämmelement und dem Karosseriebauteil, so dass eine direkte Schallübertragung gänzlich ausgeschlossen ist.

Bei einer weiteren vorteilhaften Ausführungsform der erfindungsgemäßen Lösung weist zumindest eine der U-förmigen Aufnahmen nach innen gerichtete Haltekonturen auf, welche mit dem Randbereich des Dämmelementes und/oder dem Randbereich des Karosseriebauteils zusammenwirken. Derartige Haltekonturen können beispielsweise in der Art einer Rastnase oder Rastlippe ausgebildet sein, welche eine hinterschnittartige Verbindung, insbesondere mit dem im Querschnitt verdickten Randbereich des Dämmelementes, ermöglichen. Derartige Haltekonturen sichern darüber hinaus einen zuverlässigen Halt des Dämmelementes beziehungsweise des Randbereiches des Karosseriebauteils im Dichtprofil, wodurch eine dauerhafte Verbindung zwischen den beiden Bauteilen gegeben ist. Trotz der zuverlässigen Verbindung lässt sich das Dämmelement mit entsprechendem Kraftaufwand relativ einfach aus dem elastischen Dichtprofil, insbesondere aus der elastischen U-förmigen Aufnahme herausziehen, so dass sich auch eine Demontage des Dämmelementes relativ einfach gestaltet.

Zweckmäßig ist die Querschnittsverdickung im Bereich der Tragschicht ausgebildet. Die Querschnittsverdickung kann beispielsweise in der Art einer randseitigen Nase ausgebildet sein, welche an der Tragschicht in einfacher Weise angeformt beziehungsweise angespritzt oder in einem Arbeitsschritt zusammen mit der Tragschicht hergestellt ist. Durch die an der Tragschicht ausgebildete Querschnittsverdickung wird darüber hinaus eine Versteifung, insbesondere eine umlaufende randseitige Versteifung des Dämmelementes erreicht, welche sich positiv auf die schalldämmenden Eigenschaften des Dämmelementes auswirkt.

Bei einer weiteren vorteilhaften Ausführungsform der erfindungsgemäßen Lösung sind die Schichten des Dämmelementes, also beispielsweise die Tragschicht und die Dämmschicht, im Randbereich desselben bei montiertem Dichtprofil zusammengedrückt. In diesem Fall üben die zumindest zwei U-Schenkel der U-förmigen Aufnahme des Dichtprofils eine Klemmkraft auf den Randbereich des Dämmelementes aus, welcher die sichere Halterung des Dämmelementes im Dichtprofil zusätzlich unterstützt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine Schnittdarstellung durch eine erste Ausführungsform einer erfindungsgemäßen Dämmanordnung,
- Fig.: 1b eine Schnittdarstellung durch eine nicht erfindungsgemäße Dämmanordnung
- Fig. 2: eine im Bereich einer Verdeckablage angeordnete Dämmanordnung.

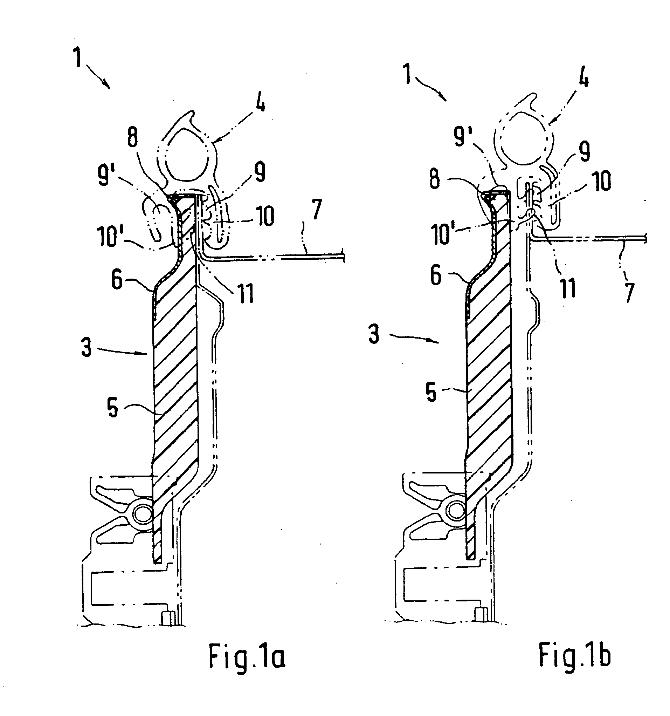

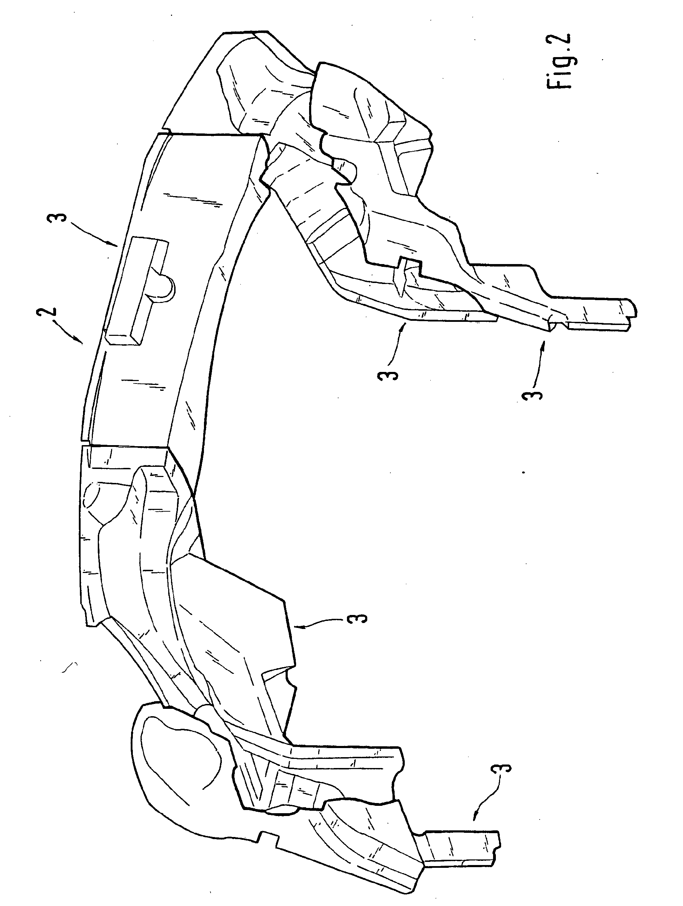

Entsprechend der Fig. 1a weist eine erfindungsgemäße Dämmanordnung 1, welche beispielsweise im Bereich einer Verdeckablage 2 (vgl. Fig. 2) angeordnet ist, ein Dämmelement 3 sowie ein Dichtprofil 4 auf. Das Dämmelement 3 weist zumindest zwei Schichten 5, 6 auf, wovon wenigstens eine als Dämmschicht 5 und eine als Tragschicht 6 ausgebildet ist. Die Tragschicht 6 kann dabei beispielsweise 0,25 bis 0,5 mm stark sein und aus Polyurethan, insbesondere aus einer Polyurethan-Sprühhaut, gebildet sein. Üblicherweise wird die Tragschicht 6 dabei auch als Schwerschicht bezeichnet. Demgegenüber besteht die im Vergleich zur Tragschicht 6 wesentlich dickere Dämmschicht 5 üblicherweise aus Polyurethan-Weichschaum.

Zur Anbindung des Dämmelementes 3 an ein Karosseriebauteil 7 des Kraftfahrzeuges ist das Dichtprofil 4 vorgesehen, welches einen Randbereich des Dämmelementes 3 sowie einen Randbereich des Karosseriebauteils 7 aufnimmt. Um eine zuverlässige Fixierung des Dämmelementes 3 am Karosseriebauteil 7 gewährleisten zu können, weist das Dämmelement 3 in seinem Randbereich eine Querschnittsverdickung 8 auf, welche in eine hinterschnittartige Aufnahme 9 des Dichtprofils 4 eingreift und dadurch fixiert ist.

Generell weist das Dichtprofil zwei U-förmige Aufnahmen 9 und 9' auf, wobei bei der gemäß Fig. 1a dargestellten Variante der Randbereich des Dämmelementes 3 sowie der Randbereich des Karosseriebauteils 7 gemeinsam in der Aufnahme 9 des Dichtprofils 4 aufgenommen sind. Nicht erfindungsgemäß ist auch vorstellbar, dass der Randbereich des Karosseriebauteils 7 in der Aufnahme 9 und der Randbereich des Dämmelementes 3 in der Aufnahme 9' des Dichtprofiles 4 fixiert sind (Fig. 1b).

Die Aufnahme 9 des Dichtprofils 4 gemäß der Fig. 1a ist wie in vorigem Absatz beschrieben als U-förmige Aufnahme 9 ausgestaltet und weist zwei U-Schenkel 10, 10' auf, welche die Randbereiche des Karosseriebauteils 7 und des Dämmelementes 3 zwischen sich einklemmen. Zur zusätzlichen Fixierung des Randbereiches des Dämmelementes 3 weist der U-Schenkel 10' nach innen gerichtete Haltekonturen 11 auf, welche mit dem Randbereich des Dämmelementes 3 zusammenwirken. Ähnliche Haltekonturen sind auch am anderen U-Schenkel 10 angeordnet, welche dort mit dem Randbereich des Karosseriebauteils 7 zusammenwirken. Denkbar ist selbstverständlich auch, dass auch der Randbereich des Karosseriebauteils 7 eine Querschnittsverdickung aufweist und dadurch hinterschnittartig mit dem Dichtprofil 4 zusammenwirkt.

Bei der in Fig. 1b gezeigten, nicht erfindungsgemäßen Variante, bei welcher die Randbereiche des Dämmelementes 3 und des Karosseriebauteils 7 in unterschiedliche Aufnahmen 9 und 9' eingreifen, können selbstverständlich entsprechende Haltekonturen 11 an beiden Aufnahmen 9, 9' vorgesehen sein.

Vorzugsweise ist zumindest eine der Haltekonturen 11 als Rastnase oder als Rastlippe ausgebildet, welche mit der Querschnittsverdickung 8 des Randbereiches des Dämmelementes 3 und/oder mit dem Randbereich des Karosseriebauteils 7 verrastet. Die Querschnittsverdickung 8 ist dabei in gemäß Fig. 1 dargestelltem Beispiel an der Tragschicht 6 ausgebildet, insbesondere einteilig mit der Tragschicht 6 hergestellt, und bietet somit den großen Vorteil, das Dämmelement 3 zusätzlich randseitig zu versteifen.

Um eine Schallübertragung zwischen dem Dämmelement 3 beziehungsweise dem Karosseriebauteil 7 zu minimieren oder möglichst ganz auszuschließen, liegt das Dämmelement 3 gemäß der in Fig. 1a dargestellten Variante mit seiner vorzugsweise im Randbereich zusammengepressten Dämmschicht 5 am Karosseriebauteil 7 an. Bei einer nicht erfindungsgemäßen Variante, bei welcher der Randbereich des Karosseriebauteils 7 und der Randbereich des Dämmelementes 3 in unterschiedliche Aufnahmen 9 und 9' am Dichtprofil 4 eingreifen, würde eine schalltechnische Entkopplung bereits durch den U-Schenkel 10' erfolgen und eine Schallübertragung zumindest erschweren.

Gemäß der Fig. 2 sind mögliche Dämmelemente 3 dargestellt, welche im Bereich der Verdeckablage 2 eines im übrigen nicht dargestellten Cabriolets angeordnet sind. Hieraus wird ersichtlich, dass die erfindungsgemäße Dämmanordnung 1 an unterschiedlichsten Stellen eines Kraftfahrzeuges anordbar ist und dadurch ein breites Anwendungsspektrum abdecken kann.

## Patentansprüche

1. Dämmanordnung (1) in einem Kraftfahrzeug mit einem Dämmelement (3), insbesondere einem schallisolierenden Formteil,
- wobei ein Dichtprofil (4) vorgesehen ist, über welches das Dämmelement (3) mit einem Randbereich mit einer Karosserie des Kraftfahrzeugs verbunden ist, und
- wobei das Dämmelement (3) in seinem mit dem Dichtprofil (4) in Verbindung stehenden Randbereich eine Querschnittsverdickung (8) aufweist, welche in eine hinterschnittartige Aufnahme (9, 9') des Dichtprofils (4) eingreift und dort fixiert ist, **dadurch gekennzeichnet, dass**:
- das Dämmelement zumindest zwei Schichten (5, 6) aufweist, wovon wenigstens eine als Dämmschicht (5) und eine als Tragschicht (6) ausgebildet ist, und
- dass das Dichtprofil (4) eine U-förmige Aufnahme (9, 9') aufweist, in welcher im Einbauzustand der im Querschnitt verdickte Randbereich (8) des Dämmelements (3) und ein Randbereich eines Karosseriebauteils (7) gemeinsam aufgenommen sind.

2. Dämmanordnung nach Anspruch 1, **dadurch gekennzeichnet, dass** das Dämmelement (3) einen zweischichtigen Aufbau (5, 6) aufweist mit einer ca. 0,25 bis 0,5mm starken Tragschicht (6) aus Polyurethan sowie einer im Vergleich dazu dickeren Dämmschicht (5) aus Polyurthan-Weichschaum.

3. Dämmanordnung nach Anspruch 1 oder 2, **dadurch gekennzeichnet, dass** die Dämmanordnung (1) im Bereich einer Verdeckablage (2) vorgesehen ist.

4. Dämmanordnung nach einem der Ansprüche 1 bis 2, **dadurch gekennzeichnet, dass** das Dichtprofil (4) zumindest zwei U-förmige Aufnahmen (9, 9') aufweist, wobei im Einbauzustand in der einen der im Querschnitt verdickte Randbereich (8) des Dämmelements (3) und in der anderen der Randbereich des Karosseriebauteils (7) aufgenommen ist.

5. Dämmanordnung nach Anspruch 3 oder 4, **dadurch gekennzeichnet, dass** zumindest eine der U-förmigen Aufnahmen (9, 9') nach innen gerichtete Haltekonturen (11) aufweist, welche mit dem Randbereich des Dämmelements (3) und/oder dem Karosseriebauteil (7) zusammenwirken.

6. Dämmanordnung nach Anspruch 5, **dadurch gekennzeichnet, dass** zumindest eine der Haltekonturen (11) als Rastnase oder Rastlippe ausgebildet und mit der Querschnittsverdickung (8) des Randbereiches des Dämmelementes (3) und/oder mit dem Randbereich des Karosseriebauteils (7) verrastet ist.

7. Dämmanordnung nach einem der Ansprüche 1 bis 6, **dadurch gekennzeichnet, dass** die Querschnittsverdickung (8) im Bereich der Tragschicht (6) ausgebildet ist.

8. Dämmanordnung nach einem der Ansprüche 1 bis 7, **dadurch gekennzeichnet, dass** die Schichten (5, 6) des Dämmelements (3) im Randbereich desselben bei montiertem Dichtprofil (4) zusammengedrückt sind.

9. Kraftfahrzeug mit einer Dämmanordnung (1) nach einem der Ansprüche 1 bis 8.

## Claims

1. Insulating arrangement (1) in a motor vehicle having an insulating element (3), in particular a sound-insulating moulded part, **characterized in that**:
- the insulating element has at least two layers (5, 6), of which at least one is formed as an insulating layer (5) and one is formed as a support layer (6), and
- wherein a sealing profile (4) is provided via which the insulating element (3) is connected by an edge region to the body of the motor vehicle, and
- wherein the insulating element (3) has a cross-sectional thickening (8) in its edge region connected to the sealing profile (4), which thickening engages in an undercut receptacle (9, 9') of the sealing profile (4) and is fixed there,
- **in that** the sealing profile (4) has a U-shaped receptacle (9, 9') in which, in the installed state, the cross-sectionally thickened edge region (8) of the insulating element (3) and an edge region of a body part (7) are jointly accommodated.

2. Insulating arrangement according to Claim 1, **characterized in that** the insulating element (3) has a two-layer structure (5, 6) with an approximately 0.25 to 0.5 mm-thick support layer (6) made of polyurethane and an insulating layer (5) made of polyurethane soft foam which is thicker than said support layer.

3. Insulating arrangement according to Claim 1 or 2, **characterized in that** the insulating arrangement (1) is provided in the region of a convertible top storage compartment (2).

4. Insulating arrangement according to either of Claims 1 and 2, **characterized in that** the sealing profile (4) has at least two U-shaped receptacles (9, 9'), wherein, in the installed state, the cross-sectionally thickened edge region (8) of the insulating element (3) is accommodated in one and the edge region of the body part (7) is accommodated in the other.

5. Insulating arrangement according to Claim 3 or 4, **characterized in that** at least one of the U-shaped receptacles (9, 9') has inwardly directed holding contours (11) which interact with the edge region of the insulating element (3) and/or the body part (7).

6. Insulating arrangement according to Claim 5, **characterized in that** at least one of the holding contours (11) is designed as a latching lug or latching lip and is latched with the cross-sectional thickening (8) of the edge region of the insulating element (3) and/or with the edge region of the body part (7).

7. Insulating arrangement according to one of Claims 1 to 6, **characterized in that** the cross-sectional thickening (8) is formed in the region of the support layer (6).

8. Insulating arrangement according to one of Claims 1 to 7, **characterized in that** the layers (5, 6) of the insulating element (3) are pressed together in the edge region of the latter when the sealing profile (4) is mounted.

9. Motor vehicle having an insulating arrangement (1) according to one of Claims 1 to 8.

## Revendications

1. Agencement d'isolation (1) dans un véhicule automobile comprenant un élément d'isolation (3), en particulier une pièce moulée d'isolation acoustique, dans lequel
- un profilé d'étanchéité (4) est prévu, par le biais duquel l'élément d'isolation (3) est connecté par une région de bord à une carrosserie du véhicule automobile, et
- l'élément d'isolation (3) présente, dans sa région de bord en liaison avec le profilé d'étanchéité (4), un épaississement de section transversale (8) qui vient en prise dans un logement (9, 9') de type contre-dépouille du profilé d'étanchéité (4) et y est fixé, **caractérisé en ce que** .
- l'élément d'isolation présente au moins deux couches (5, 6) dont au moins l'une est réalisée sous forme de couche d'isolation (5) et l'une est réalisée sous forme de couche porteuse (6), et
- le profilé d'étanchéité (4) présente un logement en forme de U (9, 9'), dans lequel, dans l'état d'installation, la région de bord (8) de section transversale épaissie de l'élément d'isolation (3) et une région de bord d'un composant de la carrosserie (7) sont reçues ensemble.

2. Agencement d'isolation selon la revendication 1, **caractérisé en ce que** l'élément d'isolation (3) présente une structure à deux couches (5, 6) avec une couche porteuse (6) en polyuréthane d'une épaisseur d'environ 0,25 à 0,5 mm ainsi qu'une couche d'isolation (5) en mousse souple de polyuréthane de plus grande épaisseur par rapport à celle-ci.

3. Agencement d'isolation selon la revendication 1 ou 2, **caractérisé en ce que** l'agencement d'isolation (1) est prévu dans la région d'un compartiment de capote (2).

4. Agencement d'isolation selon l'une quelconque des revendications 1 à 2, **caractérisé en ce que** le profilé d'étanchéité (4) présente au moins deux logements en forme de U (9, 9'), la région de bord (8) de section transversale épaissie de l'élément d'isolation (3), dans l'état d'installation, étant reçue dans l'un des logements et la région de bord du composant de la carrosserie (7) étant reçue dans l'autre logement.

5. Agencement d'isolation selon la revendication 3 ou 4, **caractérisé en ce qu'**au moins l'un des logements en forme de U (9, 9') présente des contours de retenue orientés vers l'intérieur (11) qui coopèrent avec la région de bord de l'élément d'isolation (3) et/ou avec le composant de la carrosserie (7).

6. Agencement d'isolation selon la revendication 5, **caractérisé en ce qu'**au moins l'un des contours de retenue (11) est réalisé sous forme d'ergot d'encliquetage ou de lèvre d'encliquetage et est encliqueté avec l'épaississement de section transversale (8) de la région de bord de l'élément d'isolation (3) et/ou avec la région de bord du composant de la carrosserie (7).

7. Agencement d'isolation selon l'une quelconque des revendications 1 à 6, **caractérisé en ce que** l'épaississement de section transversale (8) est réalisé dans la région de la couche porteuse (6).

8. Agencement d'isolation selon l'une quelconque des revendications 1 à 7, **caractérisé en ce que** les couches (5, 6) de l'élément d'isolation (3) sont comprimées ensemble dans la région de bord de celui-ci lorsque le profilé d'étanchéité (4) est monté.

9. Véhicule automobile comprenant un agencement d'isolation (1) selon l'une quelconque des revendications 1 à 8.
